# EUROPÄISCHE PATENTSCHRIFT

(11) **EP 3 337 685 B1**
(45) Veröffentlichungstag und Bekanntmachung des Hinweises auf die Patenterteilung: **28.07.2021**
(21) Anmeldenummer: 16756975.5
(22) Anmeldetag: 12.08.2016
(51) Int. Cl.: B60L 5/32, B60L 1/00, B60T 17/22

(54) **VERFAHREN UND EINRICHTUNG ZUR HAUPT- UND HILFSLUFTVERSORGUNG, INSBESONDERE EINES SCHIENENFAHRZEUGES**
METHOD AND DEVICE FOR SUPPLYING, IN PARTICULAR A RAIL VEHICLE, WITH MAIN AND AUXILIARY AIR
PROCÉDÉ ET DISPOSITIF D'ALIMENTATION EN AIR PRINCIPAL ET AUXILIAIRE, EN PARTICULIER D'UN VÉHICULE FERROVIAIRE

(30) Priorität: 21.08.2015 DE 102015113940
(43) Veröffentlichungstag der Anmeldung: 27.06.2018
(73) Patentinhaber: KNORR-BREMSE Systeme für Schienenfahrzeuge GmbH, 80809 München (DE)
(72) Erfinder: ASSMANN, Gert, 80337 München (DE); MERKEL, Thomas, 50354 Hürth (DE); BERGER, Peter, 85716 Unterschleißheim (DE); WITTICH, Boris, 81369 München (DE)
(86) Internationale Anmeldenummer: PCT/EP2016/069199
(87) Internationale Veröffentlichungsnummer: WO 2017/032616

(56) Entgegenhaltungen:
- DE-A1-102008 056 479
- DE-A1-102010 008 636
- DE-A1-102013 109 475
- DE-B3- 10 336 058

## Beschreibung

Die Erfindung betrifft ein Verfahren und eine Einrichtung zur Haupt- und Hilfsluftversorgung eines Fahrzeuges mit einem über einen Elektromotor angetriebenen Kompressor zur Erzeugung von Druckluft für die Befüllung zumindest eines Hauptluftbehälters zur Versorgung von pneumatischen Aggregaten des Fahrzeuges, wobei das Fahrzeug über mindestens eine erste und zweite Energiequelle mit elektrischer Energie versorgt wird, und wobei ein pneumatischer Stellantrieb zum Aufrüsten des Fahrzeuges und Aktivierung der ersten Energiequelle mit der vom Kompressor erzeugten Druckluft betrieben wird, indem der Elektromotor des Kompressors in dieser Phase über die zweite Energiequelle gespeist wird.

Das Einsatzgebiet der Erfindung erstreckt sich vornehmlich auf den Schienenfahrzeugbau, nämlich auf elektrisch betriebene Schienenfahrzeuge, welche beispielsweise über einen Pantographen die zum Betrieb erforderliche elektrische Energie von einer Oberleitung her abgreifen. Neben dieser ersten Energiequelle besitzten die hier interessierenden Fahrzeuge auch eine zweite Energiequelle, beispielsweise in Form einer Fahrzeugbatterie zur Speicherung von elektrischer Energie, welche zur Versorgung von elektrischen Nebenaggregaten vorgesehen ist, falls die erste Energiequelle nicht zur Verfüng steht. Die vom Kompressor erzeugte Druckluft wird vornehmlich zur Versorgung von pneumatischen Aggregaten, wie einer Fahrzeugbremsanlage, verwendet. Es ist auch denkbar, die vorliegende Erfindung auf nicht-schienengebundene Fahrzeuge, wie Oberleitungsbusse und dergleichen anzuwenden.

Gemäß des allgemein bekannten Standes der Technik wird zur Hilfsluftversorgung neben einem Hauptkompressor gewöhnlich ein sogenannter Hilfsluftkompressor eingesetzt, der die pneumatische Energie für den Stellantrieb des Pantographen und dergleichen bereitstellt. Ein solcher separater Hilfsluftkompressor wird durch die Fahrzeugbatterie des Schienenfahrzeuges mit elektrischer Energie vesorgt und besitzt gegenüber dem Hauptkompressor eine relativ geringe Förderleistung. Die elektrische Energie der Fahrzeugbatterie ist dabei ausreichend, um den Hilfsluftkompressor elektromotorisch anzutreiben, so dass hinreichend Druckluft zur Hilfsluftversorgung erzeugbar ist.

Aus der DE 10 2013 109 475 A1 geht eine technische Lösung hervor; bei welcher ein solcher separater Hilfsluftkompressor entbehrlich ist, da dessen Funktion von dem Hauptkompressor des Fahrzeuges mit übernommen wird. Zur Hilfsluftversorgung beim Aufrüsten des Fahrzeuges über den Hauptkompressor wird dessen antreibender Elektromotor über einen Frequenzumrichter mit der von der Fahrzeugbatterie bereitstehenden elektrischen Energie betrieben. Die so erzeugte Antriebsenergie reicht aus, um den Hauptkompressor mit relativ niedriger Drehzahl zu betrieben und die Druckluft zur Hilfsluftversorgung wird von einer Nebenleitung der Druckluftspeiseleitung abgezweigt. Die Hilfsluftabzweigung erfolgt hinter einer dem Hauptkompressor nachgeschalteten Lufttrocknereinheit. Um ein Zurückströmen von Druckluft aus dem Hauptluftbehälter zu verhindern, ist dessen Einlass mit einem Rückschlagventil versehen. Weitere Ventilmittel zur Druckluftabzweigung für den Hilfsluftbehälter sind nicht vorgesehen.

Aus der DE 10 2010 008 636 A1 werden Hauptluft- und eine Notfallluftversorgung über unabhängige Ventile beaufschlagbar. Aus der DE 10 2008 056 479 A1 ist hierzu ein weiteres Absperrventil eingesetzt.

Es ist die Aufgabe der vorliegenden Erfindung, ein Verfahren sowie eine Einrichtung zur Haupt- und Hilfsluftversorgung der gattungsgemäßen Art dahingehend weiter zu verbessern, dass mit einfachen technischen Mitteln eine steuerbare Abzweigung von Hilfsluft zum Aufrüsten des Fahrzeuges ermöglicht wird.

Die Aufgabe wird verfahrenstechnisch durch Anspruch 1 gelöst. Hinsichtlich einer hierzu korrespondierenden Einrichtung zur Haupt- und Hilfsluftversorgung wird auf Anspruch 5 und 6 verwiesen. Die jeweils rückbezogenen abhängigen Ansprüche geben vorteilhafte Weiterbildungen der Erfindung wieder.

Die Erfindung schließt die technische Lehre ein, dass die Druckluft zum Aufrüsten des Fahrzeuges von einem über die zweite Energiequelle vorzugsweise batteriebetriebenen (Haupt-)Kompressor über eine Schaltventileinrichtung einen dem pneumatischen Stellantrieb des Pantographen oder Hauptschalters zugeordneren Hilfsluftbehälter zugeführt wird. Ansonsten, also nach erfolgtem Aufrüsten und Aktivierung der ersten Energiequelle, wird die vom Kompressor erzeugte Druckluft über die Schaltventileinrichtung dem Hauptluftbehälter zugeführt.

Der Vorteil der erfindungsgemäßen Lösung liegt insbesondere darin, dass das Aufrüsten des Fahrzeuges, also die Herstellung der Betriebsbereitschaft, durch Anlegen beispielsweise eines Pantographen an eine elektrische Oberleitung, auch mit im Ausgangszustand entleertem Hauptluft- und Hilfsluftbehälter ohne einen seperaten Hilfskompressor erfolgen kann. Indem der Elektromotor des Kompressors beispielsweise über die Fahrzeugbatterie als zweite Energiequelle gespeist wird, kann der Kompressor mit ausreichender Förderleistung zunächst ventilgesteuert den Hilfsluftbehälter für den Betrieb des pneumatischen Stellantriebs des Pantographen mit Druckluft befüllen, um den Pantographen hiermit auszufahren. Ist anschließend die erste Energiequelle über den Pantographen angeschlossen, lässt sich der Kompressor mit normaler Förderleistung betreiben und die hiermit erzeugte Druckluft wird über die Schaltventileinrichtung dem Hauptluftbehälter und einer vorzugsweise diesem zugeorderen Hauptluftbehälterleitung zur Verfügung gestellt. Die erfindungsgemäße Schaltventileinrichtung ermöglicht damit eine bedarfsgerechte Druckluftzuleitung, insbesondere in der Betriebsphase des Aufrüstens des Fahrzeuges.

Auch während des normalen Betriebs des Fahrzeuges, also außerhalb des Aufrüstens, kann die Schaltventileinrichtung derart durch den Druck im Hilfsluftbehälter aktiviert werden, dass bei Unterschreitung eines Mindestdrucks im Hilfsluftbehälter dieser mit Druckluft wieder aufgefüllt wird. Ist der Solldruck im Hilfsdruckbehälter erreicht, so kann die Schaltventileinrichtung wieder umgeschaltet werden, so dass wieder der Hauptluftbehälter bedarfsgesteuert durch die vom Kompressor erzeugte Druckluft befüllbar ist. Diese Maßnahme stellt sicher, dass der Hilfsluftbehälter mit höherer Priorität als der Hauptluftbehälter mit Druckluft befüllt wird. Der Schaltdruck der Schaltventileinrichtung liegt vorzugsweise unterhalb des Nennversorgungsdrucks des Hauptluftbehälters. Bei einem Nennversorgungsdruck von 8,5 bis 10 bar kann der Schaltdruck beispielsweise bei 7,5 bar liegen.

Alternativ oder zusätzlich hierzu wird vorgeschlagen, die Befüllung des Hilfsluftbehälters mit Druckluft des Hauptluftbehälter vorzumehmen, falls hierin ausreichend Druckluft bevorratet ist. Hierfür kann in einfacher Weise ein zur Schaltventileinrichtung parallel geschaltetes Ventilelement vorgesehen werden, das auch Bestandteil der Schaltventileinrichtung sein kann. Das parallel geschaltete Ventilelement verbindet unter Umgehung der Schaltventileinrichtung den Hauptluftbehälter mit dem Hilfsluftbehälter. Im einfachsten Fall kann das Ventilelement als ein federbeaufschlagtes Rückschlagventil mit Durchlassrichtung vom Hauptluftbehälter zum Hilfsluftbehälter ausgebildet sein. Über die Federstärke des Rückschlagventils lässt sich der Schaltdruck einstellen. Gemäß einer alternativen Ausführungform ist es jedoch auch möglich, anstelle eines Rückschlagventils ein anderes mechanisches, pneumatisch, hydraulisch oder elektrisch angesteuertes Ventil zu verwenden.

Die erfindungsgegenständliche Schaltventileinrichtung ist vorzugsweise elektrisch angesteuert, wobei die Steuereinheit in diesem Fall ein elektrisches Steuersignal vorgibt. Auch die erfindungsgemäße Schaltventileinrichtung kann stattdessen mechanisch, pneumatisch oder hydraulisch angesteuert sein. Es ist insoweit beispielsweise auch möglich, dass die Schaltventileinrichtung mittels Überströmventil und die Drucksensoren mittels Druckschalter rein mechanisch realisiert sind. In diesem Falle kann eine Steuereinheit, insbesondere eine elektronische Steuereinheit, auch entfallen.

Bei einer elektrisch angesteuerten Schaltventileinrichtung ist die Steuereinheit als eine elektronische Steuereinheit ausgebildet, welche eingangsseitig elektrisch mit einem Drucksensor am Hauptluftbehälter sowie einem Drucksensor am Hilfsluftbehälter verbunden ist. Anstelle von Drucksensoren ist es auch möglich, binär schaltende Druckschalter zu verwenden. Hierdurch verfügt die elektronische Steuereinheit stets über die aktuelle Information des herrschenden Druckniveaus in beiden Behältern und kann je nach Priorität die Druckluftversorgung zum Hilfs- und Hauptluftbehälter steuern, und die elektronische Steuereinheit gibt ein entsprechendes Schaltsignal für die elektrisch ansteuerbare Schaltventileinrichtung aus. Daneben kann über die elektronische Steuereinheit auch der Elektromotor des Kompressors angesteuert werden.

Vorzugsweise lässt sich die Förderleistung des Kompressors durch einen dem Elektromotor vorgeschalteten Umrichter mittels Variation von Spannung und/oder Frequenz einstellen. Dies kann entweder variabel oder in festen Stufen erfolgen. Alternativ hierzu kann die Förderleistung des Kompressors auch durch eine elektrische, pneumatische, hydraulische oder mechanische Betätigung einer Ventileinrichtung, beispielsweise Entlüftungseinrichtung, am Kompressor variiert werden, beispielsweise zwischen Hochdruck- und Niederdruckstufe eines insoweit mehrstufigen Kolbenkompressors.

Die erfindungsgemäße Schaltventileinrichtung kann gemäß einer ersten bevorzugten Ausführungsform als ein 3/2-Wegeventil ausgebildet sein, das in einer ersten Schaltstellung den vom Kompressor generierten Speisedruck dem Hilfsluftbehälter und in einer zweiten Schaltstellung den vom Kompressor generierten Speisedruck dem Hauptluftbehälter zuführt.

Gemäß einer zweiten bevorzugten Ausführungsform kann die Schaltventileinrichtung auch als ein 2/2-Wegeventil ausgebildet sein, das in einer geöffneten Schaltstellung den vom Kompressor generierten Speisedruck dem Hauptluftbehälter zuführt und in einer geschlossenen Schaltstellung diese Verbindung absperrt, wobei in Ergänzung hierzu eine permanente Druckluftverbindung vom Kompressor zum Hilfsluftbehälter hin besteht. Bei dieser Ausführungsform hat die Beaufschlagung des Hilfsluftbehälters mit Druckluft Priorität, ohne dass hierfür die Schaltventileinrichtung aktiviert werden muss.

Es sei darauf hingewiesen, dass dem Kompressor zur Druckluftversorgung gewöhnlich eine Lufttrocknereinheit nachgeschaltet ist, die die vom Kompressor aus der Umgebungsluft erzeugte Druckluft hinreichend trocknet, ehe diese dem weiteren Druckluftsystem zur Verfügung gestellt wird. Die Lufttrocknereinheit kann beispielsweise als ein Adsorbtions-Lufttrockner ausgebildet sein.

Weiterhin sei darauf hingewiesen, dass aus dem Hilfsluftbehälter heraus beim Aufrüsten nicht nur der Stellantrieb des Pantographen mit Druckluft beaufschlagt werden kann, sondern zusätzlich hierzu - falls erforderlich - beispielsweise auch ein an sich bekannter pneumatisch ansteuerbarer Hauptschalter zum Durchschalten der Stromzufuhr zum Fahrzeug.

Weitere, die Erfindung verbessernde Maßnahmen werden nachstehend mit der Beschreibung von bevorzugten Ausführungsbeispielen der Erfindung anhand der Figuren näher dargestellt. Es zeigt:
- Figur 1:: eine schematische Blockschaltbilddarstellung einer Einrichtung zur Hauptund Hilfsluftversorgung für ein Schienenfahrzeug mit einer Schaltventileinrichtung gemäß einer ersten Ausführungsform, und
- Figur 2 :: eine schematische Blockschaltbilddarstellung einer Einrichtung zur Hauptund Hilfsluftversorgung für ein Schienenfahrzeug mit einer Schaltventileinrichtung gemäß einer zweiten Ausführungsform.

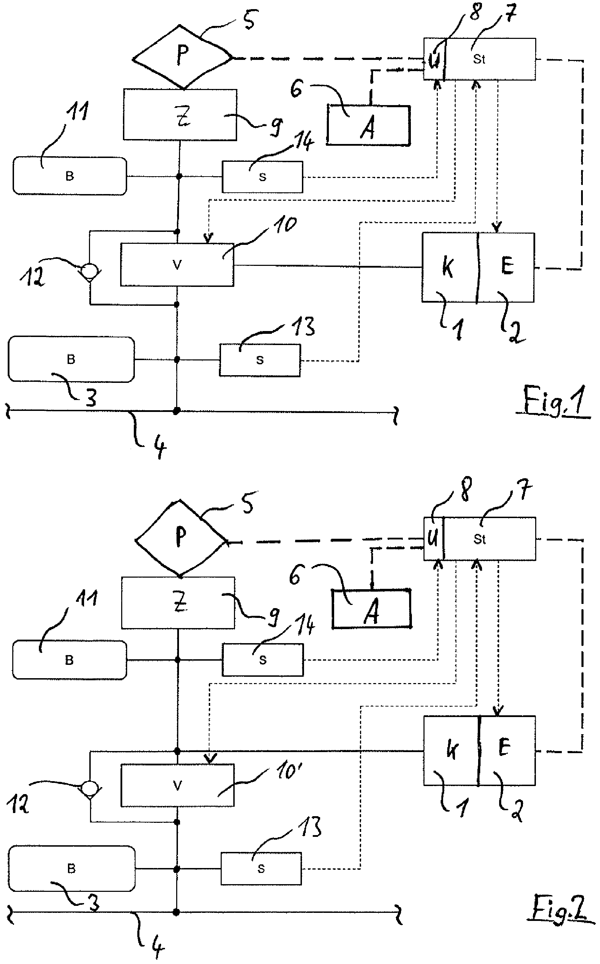

Gemäß Figur 1 ist im Rahmen einer Haupt- und Hilfsluftversorgung eines - nicht weiter dargestellten - Schienenfahrzeuges ein Kompressor 1 zur Erzeugung von Druckluft für die Befüllung eines Hauptluftbehälters 3 sowie einer hiermit verbundenen Hauptluftbehälterleitung 4 vorgesehen. Der Kompressor 1 wird durch einen Elektromotor 2 angetrieben. Die elektrische Energie für den Antrieb des Elektromotors 2 wird primär über einen Pantographen 5 per Oberleitungsanschluss bezogen. Für eine zweite elektrische Energieversorgung dient eine Fahrzeugbatterie 6. Die elektrische Energieversorgung mittels Pantographen 5 und Fahrzeugbatterie 6 wird über eine elektronische Steuereinheit 7 gesteuert, welche auch einen integrierten Umrichter 8 zur Variation von Spannung und Frequenzen für den Antrieb des Elektromotors 2 enthält. Der Elektromotor 2 ist hier als Drehstrommotor ausgebildet.

Ein den Pantographen 5 zugeordneter pneumatischer Stellantrieb 9 wird zum Ein- und Ausfahren des Pantographen 5 mit der vom Kompressor 1 erzeugten Druckluft betrieben.

Da in der Phase des Aufrüstens des Fahrzeuges, in welcher der Pantograph 5 sich noch in der eingefahrenen Ruheposition befindet, keine elektrische Energie von der Oberleitung zur Verfügung steht, wird der Elektromotor 2 des Kompressors 1 zunächst über die Fahrzeugbatterie 6 mit elektrischer Energie versorgt. Die von der Fahrzeugbatterie 6 aufbringbare elektrische Energie genügt in dieser Phase des Aufrüstens des Fahrzeuges, um den Kompressor 1 mit geringer Förderleistung zu betreiben, welche zur Aktivierung des pneumatischen Stellantriebs 9 zum Ausfahren des Pantographen 5 ausreicht.

Zu diesem Zweck wird die vom Kompressor 1 batteriebetrieben erzeugte Druckluft über eine Schaltventileinrichtung 10, welche hier als ein elektropneumatisches 3/2-Wegeventil ausgebildet ist, nach Maßgabe der elektrischen Steuereinheit 7 einem Hilfsluftbehälter 11 zugeführt, welcher die Druckluft zum Betrieb des pneumatischen Stellantriebes 9 des Pantographen 5 bevorratet. Außerhalb der Phase des Aufrüstens des Fahrzeuges führt die Schaltventileinrichtung 10 die vom Kompressor 1 erzeugte Druckluft dem Hauptluftbehälter 3 des Fahrzeuges zu. Die Befüllung des Hauptluftbehälters 3 des Fahrzeuges erfolgt vorzugsweise bei primärer elektrischer Energieversorgung über den Pantographen 5.

Befindet sich zum Zeitpunkt eines Aufrüstens des Fahrzeuges noch genügend Druckluft zwischen 8,5 bis 10bar im Hauptluftbehälter 3, so kann die Befüllung eines entleerten Hilfsluftbehälters 11 auch hieraus erfolgen. Zu diesem Zweck ist ein zur Schaltventileinrichtung 10 parallel geschaltetes Ventilelement 12 in Form eines Rückschlagventils mit Durchlassrichtung vom Hauptluftbehälter 3 zum Hilfsluftbehälter 11 vorhanden.

Bei diesem Ausführungsbeispiel ist die Schaltventileinrichtung 10 elektrisch angesteuert und die elektronische Steuereinheit 7 gibt hierfür das elektrische Schaltsignal vor (Punktlinie). Der elektronischen Steuereinheit 10 wird signaleingangsseitig das Drucksignal eines ersten Drucksensors 13 am Hauptluftbehälter 3 sowie eines zweiten Drucksensors 14 am Hilfsluftbehälter 11 zugeführt (Punktlinien). Hieraus ermittelt die elektronische Steuereinheit 10 nach Maßgabe der vorstehend erläuterten Logik das Schaltsignal für die elektrisch ansteuerbare Schaltventileinrichtung 10 sowie des Kompressors 1.

Hinsichtlich der als 3/2-Wegeventil ausgebildeten Schaltventileinrichtung 10 wird in einer ersten Schaltstellung der vom Kompressor 1 generierte Speisedruck dem Hilfsluftbehälter 11 - insbesondere in der Phase des Aufrüstens - zugeführt und in einer zweiten Schaltstellung wird der vom Kompressor 1 generierte Speisedruck dem Hauptluftbehälter 3 zugeführt, um die Hauptluftversorgung des Fahrzeuges sicherzustellen.

Gemäß der in Figur 2 illustrierten alternativen Ausführungsform ist eine Schaltventileinrichtung 10' als ein 2/2-Wegeventil ausgebildet. Dieses führt in einer geöffneten Schaltstellung den vom Kompressor 1 generierten Speisedruck dem Hauptluftbehälter 3 zu. In einer geschlossenen Schaltstellung sperrt die Schaltventileinrichtung 10' diese Verbindung ab. Außerdem besteht eine permanente Druckluftverbindung vom Kompressor 1 zum Hilfsluftbehälter 11, welche insoweit von der Schaltstellung der Schaltventileinrichtung 10' unbeeinflusst bleibt. Hierdurch wird eine primäre Druckluftbeaufschlagung des Hilfsluftbehälters 11 ohne Ventilbetätigung erzielt.

Die Erfindung ist nicht beschränkt auf die beiden vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, die Schaltventileinrichtung als pneumatisch, hydraulisch oder mechanisch vorgesteuertes Ventil auszubilden und die Ansteuerung erfolgt mit dem entsprechend passenden Steuermedium. Daneben können beispielsweise auch anstelle der elektrischen Drucksensoren mechanische Druckwächter oder dergleichen zur Überwachung des Druckniveaus im Hauptluftbehälter 3 sowie Hilfsluftbehälter 11 Verwendung finden. Ferner kann das der Schaltventileinrichtung 10 bzw. 10' parallel geschaltete Ventilelement auch als aktiv angesteuertes Ventil oder dergleichen ausgebildet sein. Auch hinsichtlich der Ausbildung des Kompressors mit oder ohne hiermit verbundener Druckluftaufbereitung und Entlüftungseinrichtung besteht im Rahmen des beanspruchten Schutzbereichs keine Beschränkung.

### BEZUGSZEICHENLISTE

- 1: Kompressor
- 2: Elektromotor
- 3: Hauptluftbehälter
- 4: Hauptluftbehälterleitung
- 5: Pantograph
- 6: Fahrzeugbatterie
- 7: Steuereinheit
- 8: Umrichter
- 9: Stellantrieb
- 10: Schaltventileinrichtung
- 11: Hilfsluftbehälter
- 12: Ventilelement
- 13: Drucksensor
- 14: Drucksensor

## Patentansprüche

1. Verfahren zur Haupt- und Hilfsluftversorgung eines Fahrzeuges mit einem über einen Elektromotor (2) angetriebenen Kompressor (1) zur Erzeugung von Druckluft für die Befüllung zumindest eines Hauptluftbehälters (3) zur Versorgung von pneumatischen Aggregaten des Fahrzeuges,
- wobei das Fahrzeug über mindestens eine erste und zweite Energiequelle mit elektrischer Energie versorgt wird,
- wobei ein pneumatischer Stellantrieb (9) zum Aufrüsten des Fahrzeuges und Aktivierung der ersten Energiequelle mit der vom Kompressor (1) erzeugten Druckluft betrieben wird, indem in dieser Phase der Elektromotor (2) des Kompressors (1) über die zweite Energiequelle gespeist wird,
**dadurch gekennzeichnet, dass** die Druckluft zum Aufrüsten über eine Schaltventileinrichtung (10; 10') einem dem pneumatischen Stellantrieb (9) zugeordneten Hilfsluftbehälter (11) zugeführt wird,
- und dass ansonsten die vom Kompressor (1) erzeugte Druckluft über die Schaltventileinrichtung (10; 10') dem Hauptluftbehälter (3) zugeführt wird, indem entweder die Schaltventileinrichtung (10) als ein 3/2-Wegeventil ausgebildet ist, das in einer ersten Schaltstellung den vom Kompressor (1) generierten Speisedruck dem Hilfsluftbehälter (11) und in einer zweiten Schaltstellung den vom Kompressor (1) generierten Speisedruck dem Hauptluftbehälter (3) zuführt, oder die Schaltventileinrichtung (10') als ein 2/2-Wegeventil ausgebildet ist, das in einer geöffneten Schaltstellung den vom Kompressor (1) generierten Speisedruck dem Hauptluftbehälter (3) zuführt und in einer geschlossenen Schaltstellung diese Verbindung absperrt, wobei eine permanente Druckluftverbindung vom Kompressor (1) zum Hilfsluftbehälter (11) hin besteht.

2. Verfahren nach Anspruch 1,
**dadurch gekennzeichnet, dass** die Schaltventileinrichtung (10; 10') derart durch den Druck im Hilfsluftbehälter (11) aktiviert wird, dass bei Unterschreitung eines Mindestdrucks der Hilfsluftbehälter (11) mit Druckluft wiederaufgefüllt wird.

3. Verfahren nach Anspruch 1,
**dadurch gekennzeichnet, dass** die Schaltventileinrichtung (10; 10') derart durch den Druck im Hilfsluftbehälter (11) aktiviert wird, dass bei Erreichen eines Solldrucks bei Bedarf der Hauptluftbehälter (3) befüllt wird.

4. Verfahren nach Anspruch 1,
**dadurch gekennzeichnet, dass** die Förderleistung des Kompressors (1) durch einen dem Elektromotor (2) vorgeschalteten Umrichter (8) mittels Variation von Spannung und/oder Frequenz eingestellt wird.

5. Einrichtung zur Haupt- und Hilfsluftversorgung eines Fahrzeuges mit einem über einen Elektromotor (2) angetriebenen Kompressor (1) zur Erzeugung von Druckluft für die Befüllung zumindest eines Hauptluftbehälters (3) zur Versorgung von pneumatischen Aggregaten des Fahrzeuges,
- wobei das Fahrzeug über mindestens eine erste und zweite Energiequelle zur Versorgung mit elektrischer Energie verfügt,
- wobei ein pneumatischer Stellantrieb (9) zum Aufrüsten des Fahrzeuges und Aktivierung der ersten Energiequelle mit der vom Kompressor (1) erzeugten Druckluft vorgesehen ist, indem in dieser Phase die zweite Energiequelle den Elektromotor (2) des Kompressors (1) speist,
**dadurch gekennzeichnet, dass** eine Schaltventileinrichtung (10; 10') die Druckluft zum Aufrüsten einem dem pneumatischen Stellantrieb (9) zugeordneten Hilfsluftbehälter (11) zuführt,
- und dass ansonsten die Schaltventileinrichtung (10; 10') die vom Kompressor (1) erzeugte Druckluft dem Hauptluftbehälter (3) zuführt, und dass die Schaltventileinrichtung (10) als ein 3/2-Wegeventil ausgebildet ist, das in einer ersten Schaltstellung den vom Kompressor (1) generierten Speisedruck dem Hilfsluftbehälter (11) und in einer zweiten Schaltstellung den vom Kompressor (1) generierten Speisedruck dem Hauptluftbehälter (3) zuführt.

6. Einrichtung zur Haupt- und Hilfsluftversorgung eines Fahrzeuges mit einem über einen Elektromotor (2) angetriebenen Kompressor (1) zur Erzeugung von Druckluft für die Befüllung zumindest eines Hauptluftbehälters (3) zur Versorgung von pneumatischen Aggregaten des Fahrzeuges,
- wobei das Fahrzeug über mindestens eine erste und zweite Energiequelle zur Versorgung mit elektrischer Energie verfügt,
- wobei ein pneumatischer Stellantrieb (9) zum Aufrüsten des Fahrzeuges und Aktivierung der ersten Energiequelle mit der vom Kompressor (1) erzeugten Druckluft vorgesehen ist, indem in dieser Phase die zweite Energiequelle den Elektromotor (2) des Kompressors (1) speist,
**dadurch gekennzeichnet, dass** eine Schaltventileinrichtung (10; 10') die Druckluft zum Aufrüsten einem dem pneumatischen Stellantrieb (9) zugeordneten Hilfsluftbehälter (11) zuführt,
- und dass ansonsten die Schaltventileinrichtung (10; 10') die vom Kompressor (1) erzeugte Druckluft dem Hauptluftbehälter (3) zuführt, und dass die Schaltventileinrichtung (10') als ein 2/2-Wegeventil ausgebildet ist, das in einer geöffneten Schaltstellung den vom Kompressor (1) generierten Speisedruck dem Hauptluftbehälter (3) zuführt und in einer geschlossenen Schaltstellung diese Verbindung absperrt, wobei eine permanente Druckluftverbindung vom Kompressor (1) zum Hilfsluftbehälter (11) hin besteht.

7. Einrichtung nach Anspruch 5 oder 6,
**dadurch gekennzeichnet, dass** ein zur Schaltventileinrichtung (10) parallel geschaltetes Ventilelement (12) vorgesehen ist, das den Hilfsluftbehälter (11) alternativ mit Druckluft aus dem Hauptluftbehälter (3) befüllt.

8. Einrichtung nach Anspruch 7,
**dadurch gekennzeichnet, dass** das Ventilelement (12) als ein federbeaufschlagtes Rückschlagventil mit Durchlassrichtung vom Hauptluftbehälter (3) zum Hilfsluftbehälter (11) ausgebildet ist.

9. Einrichtung nach Anspruch 7 oder 8,
**dadurch gekennzeichnet, dass** der Schaltdruck der Schaltventileinrichtung (10; 10') unterhalb des Nennversorgungsdrucks des Hauptluftbehälters (3) liegt.

10. Einrichtung nach Anspruch 5 oder 6,
**dadurch gekennzeichnet, dass** eine Steuereinheit (7) zur Ansteuerung der Schaltventileinrichtung (10; 10') ein Schaltsignal vorgibt.

11. Einrichtung nach Anspruch 10,
**dadurch gekennzeichnet, dass** die Steuereinheit (7) als eine elektronische Steuereinheit ausgebildet ist, und eingangsseitig mit einem Drucksensor (13) am Hauptluftbehälter (3) sowie einem Drucksensor (14) am Hilfsluftbehälter (11) elektrisch verbunden ist, woraus die elektronische Steuereinheit (10; 10') das Schaltsignal für die elektrisch ansteuerbare Schaltventileinrichtung (10) und/oder des Kompressors (1) ermittelt.

12. Einrichtung nach Anspruch 5 oder 6,
**dadurch gekennzeichnet, dass** die Schaltventileinrichtung (10; 10') mittels Überströmventil und die Drucksensoren (13, 14) mittels Druckschalter rein mechanisch realisiert sind.

13. Einrichtung nach einem der Ansprüche 5 bis 12,
**dadurch gekennzeichnet, dass** die erste Energiequelle als ein Pantograph (5) zum Oberleitungsabgriff von elektrischer Energie, als eine unterhalb des Fahrzeuges verlaufende Stromschiene oder als ein elektrische Energie erzeugendes Bordaggregat ausgebildet ist, und dass die zweite Energiequelle als eine Fahrzeugbatterie (6) ausgebildet ist.

14. Einrichtung nach einem der Ansprüche 5 bis 13,
**dadurch gekennzeichnet, dass** der pneumatische Stellantrieb (9) einen Pantographen (5) und/oder einen Hauptschalter zum Einschalten eines Anlassers für ein elektrische Energie erzeugendes Bordaggregat betätigt.

## Claims

1. Method for supplying main and auxiliary air to a vehicle having a compressor (1) that is driven via an electric motor (2) so as to generate compressed air for filling at least one main air container (3) for supplying pneumatic units of the vehicle,
- wherein the vehicle is supplied with electrical energy via at least one first and second energy source,
- wherein a pneumatic adjustment drive (9) is operated to so as to prepare the vehicle for use and activate the first energy source using the compressed air that is generated by the compressor (1), in that the electric motor (2) of the compressor (1) is supplied in this phase via the second energy source,
**characterised in that** the compressed air is supplied for the procedure of preparing the vehicle for use via a switching valve device (10; 10') to an auxiliary air container (11) that is allocated to the pneumatic adjustment drive (9),
- and **in that** otherwise the compressed air that is generated by the compressor (1) is supplied via the switching valve device (10; 10') to the main air container (3), by providing either that the switching valve device (10) is designed as a 3/2-way valve feeding in a first switching position the feed pressure generated by the compressor (1) to the auxiliary air container (11) and in a second position the feed pressure generated by the compressor (1) to the main air container (3), or that the switching valve device (10') is designed as a 2/2-way valve supplying in a open switching position the feed pressure generated by the compressor (1) to the main air container (3) and in a closed switching position closes this connection, with a permanent compressed air connection existing from the compressor (1) to the auxiliary air container (11).

2. Method according to claim 1,
**characterised in that** the switching valve device (10; 10') is activated by means of the pressure in the auxiliary air container (11) in such a manner that when the pressure level is below a minimum pressure the auxiliary air container (11) is refilled with compressed air.

3. Method according to claim 1,
**characterised in that** the switching valve device (10; 10') is activated by means of the pressure in the auxiliary air container (11) in such a manner that when a desired pressure is achieved, the main air container (3) is filled when necessary.

4. Method according to claim 1,
**characterised in that** the output power of the compressor (1) is set by an inverter (8), which is connected upstream of the electric motor (2), by means of varying the voltage and/or the frequency.

5. Device for supplying main and auxiliary air to a vehicle having a compressor (1) that is driven via an electric motor (2) so as to generate compressed air for filling at least one main air container (3) for supplying pneumatic units of the vehicle,
- wherein the vehicle comprises at least one first and second energy source for supplying electrical energy,
- wherein a pneumatic adjustment drive (9) is provided so as to prepare the motor vehicle and to activate the first energy source using the compressed air that is generated by the compressor (1), in that in this phase the second energy source supplies the electric motor (2) of the compressor (1),
**characterised in that** a switching valve device (10; 10') supplies the compressed air to an auxiliary air container (11) that is allocated to the pneumatic adjustment drive (9) for the procedure of preparing the vehicle for use,
- and **in that** the switching valve device (10; 10') otherwise supplies the compressed air generated by the compressor (1) to the main air container (3), and **in that** the switching valve device (10) is designed as a 3/2-way valve feeding in a first switching position the feed pressure generated by the compressor (1) to the auxiliary air container (11) and in a second position the feed pressure generated by the compressor (1) to the main air container (3).

6. Device for supplying main and auxiliary air to a vehicle having a compressor (1) that is driven via an electric motor (2) so as to generate compressed air for filling at least one main air container (3) for supplying pneumatic units of the vehicle,
- wherein the vehicle comprises at least one first and second energy source for supplying electrical energy,
- wherein a pneumatic adjustment drive (9) is provided so as to prepare the motor vehicle and to activate the first energy source using the compressed air that is generated by the compressor (1), in that in this phase the second energy source supplies the electric motor (2) of the compressor (1),
**characterised in that** a switching valve device (10, 10') supplies the compressed air to an auxiliary air container (11) that is allocated to the pneumatic adjustment drive (9) for the procedure of preparing the vehicle for use,
- and **in that** otherwise the switching valve device (10; 10') supplies the compressed air that is generated by the compressor (1) to the main air container (3), and **in that** the switching valve device (10') is designed as a 2/2-way valve supplying in a open switching position the feed pressure generated by the compressor (1) to the main air container (3) and in a closed switching position closes this connection, with a permanent compressed air connection existing from the compressor (1) to the auxiliary air container (11).

7. Device according to claim 5 or 6,
**characterised in that** a valve element (12) is provided that is connected in parallel to the switching valve device (10) and said valve element fills the auxiliary air container (11) alternatively with compressed air from the main air container (3).

8. Device according to claim 7,
**characterised in that** the valve element (12) is configured as a spring-loaded non-return valve that has a through flow direction from the main air container (3) to the auxiliary air container (11).

9. Device according to claim 7 or 8,
**characterised in that** the switching pressure of the switching device (10; 10') lies below the nominal supply pressure of the main air container (3).

10. Device according to claim 5 or 6,
**characterised in that** a control unit (7) for activating the switching device (10; 10') presets a switching signal.

11. Device according to claim 10,
**characterised in that** the control unit (7) is designed as an electronic control unit, and its input side is electrically connected to a pressure sensor (13) at the main air container (3) and to a pressure sensor (14) at the auxiliary air container (11), from which the electronic control unit (10; 10') determines the switching signal for the electronically controllable switching valve device (10) and/or the compressor (1).

12. Device according to claim 5 or 6,
**characterised in that** the switching device (10; 10') is implemented purely mechanically by means of an overflow valve and the pressure sensors (13, 14) are implemented purely mechanically by means of pressure switches.

13. Device according to any of claims 5 to 12,
**characterised in that** the first energy source is designed as a pantograph (5) for tapping electrical energy from a catenary, as a contact rail extending below the vehicle or as an onboard unit generating electrical energy, and **in that** the second energy source is designed as a vehicle battery (6).

14. Device according to any of claims 5 to 12,
**characterised in that** the pneumatic adjustment drive (9) actuates a pantograph (5) and/or main switch for switching on a starter for an onboard unit generating electrical energy.

## Revendications

1. Procédé d'alimentation en air principal et auxiliaire d'un véhicule comprenant un compresseur (1), entraîné par un moteur (2) électrique, pour la production d'air comprimé afin de remplir au moins un récipient (3) d'air principal d'alimentation de groupes pneumatiques du véhicule,
- dans lequel on alimente le véhicule en énergie électrique par au moins une première et une deuxième source d'énergie,
- dans lequel on fait fonctionner un servomoteur (9) pneumatique pour le réglage du véhicule et l'activation de la première source d'énergie par l'air comprimé produit par le compresseur (1) en alimentant dans cette phase le moteur (2) électrique du compresseur (1) par la deuxième source d'énergie,
**caractérisé en ce que** l'on envoie l'air comprimé pour le réglage par un dispositif (10, 10') de vannes de commutation à un récipient (11) d'air auxiliaire associé au servomoteur (9) pneumatique,
- et **en ce que** sinon on envoie l'air comprimé produit par le compresseur (1) au récipient (3) d'air principal par le dispositif (10, 10') de vannes de commutation, par le fait que soit le dispositif (10) de vannes de commutation est constitué sous la forme d'une vanne à 3/2 voies, qui, dans une première position de commutation, applique la pression d'alimentation produite par le compresseur (1) au récipient (11) d'air auxiliaire et, dans une deuxième position de commutation, applique la pression d'alimentation produite par le compresseur (1) au récipient (3) d'air principal, soit par le fait que le dispositif (10, 10') de vannes de commutation est constitué sous la forme d'une vanne à 2/2 voies, qui, dans une position de commutation ouverte, applique au récipient (3) d'air principal la pression d'alimentation produite par le compresseur (1) et, dans une position de commutation fermée, ferme cette liaison, une liaison permanente pour l'air comprimé du compresseur (1) au récipient (11) d'air auxiliaire subsistant.

2. Procédé suivant la revendication 1,
**caractérisé en ce que** l'on active le dispositif (10, 10') de vannes de commutation par la pression dans le récipient (11) d'air auxiliaire de manière à remplir à nouveau d'air comprimé le récipient (11) d'air auxiliaire si l'on passe en dessous d'une pression minimum.

3. Procédé suivant la revendication 1,
**caractérisé en ce que** l'on active le dispositif (10, 10') de vannes de commutation par la pression dans le récipient (11) d'air auxiliaire de manière à remplir le récipient (3) d'air principal en cas de besoin lorsqu'une pression de consigne est atteinte.

4. Procédé suivant la revendication 1,
**caractérisé en ce que** l'on règle la puissance utile du compresseur (1) par un convertisseur (8) monté en aval du moteur (2) électrique au moyen d'une variation de la tension et/ou de la fréquence.

5. Dispositif d'alimentation en air principal et auxiliaire d'un véhicule comprenant un compresseur (1) entraîné par un moteur (2) électrique afin de produire de l'air comprimé pour le remplissage d'au moins un récipient (3) d'air principal afin d'alimenter des groupes pneumatiques du véhicule,
- dans lequel le véhicule dispose d'au moins une première et une deuxième source d'énergie pour l'alimentation en énergie électrique,
- dans lequel un servomoteur (9) pneumatique est prévu pour le réglage du véhicule et l'activation de la première source d'énergie par l'air comprimé produit par le compresseur (1), par le fait que dans cette phase, la deuxième source d'énergie alimente le moteur (2) électrique du compresseur (1), **caractérisé en ce qu'**un dispositif (10, 10') de vannes de commutation envoie l'air comprimé pour le réglage à un récipient (11) d'air auxiliaire associé au servomoteur (9) pneumatique,
- et **en ce que** sinon le dispositif (10, 10') de vannes de commutation envoie l'air comprimé produit par le compresseur (1) au récipient (3) d'air principal et **en ce que** le dispositif (10) de vannes de commutation est constitué sous la forme d'une vanne à 3/2 voies, qui, dans une première position de commutation, applique la pression d'alimentation produite par le compresseur (1) au récipient (11) d'air auxiliaire et, dans une deuxième position de commutation, applique la pression d'alimentation produite par le compresseur (1) au récipient (3) d'air principal.

6. Dispositif d'alimentation en air principal et auxiliaire d'un véhicule par un compresseur (1) entraîné par un moteur (2) électrique pour la production d'air comprimé pour remplir au moins un récipient (3) d'air principal afin d'alimenter des groupes pneumatiques du véhicule,
- dans lequel le véhicule dispose d'au moins une première et une deuxième source d'énergie pour l'alimentation en énergie électrique,
- dans lequel un servomoteur (9) pneumatique est prévu pour le réglage du véhicule et l'activation de la première source d'énergie par l'air comprimé produit par le compresseur (1), par le fait que dans cette phase, la deuxième source d'énergie alimente le moteur (2) électrique du compresseur (1), **caractérisé en ce qu'**un dispositif (10, 10') de vannes de commutation envoie l'air comprimé pour le réglage à un récipient (11) d'air auxiliaire associé au servomoteur (9) pneumatique,
- et **en ce que** sinon le dispositif (10, 10') de vannes de commutation envoie l'air comprimé produit par le compresseur (1) au récipient (3) d'air principal et **en ce que** le dispositif (10) de vannes de commutation est constitué sous la forme d'une vanne à 2/2 voies, qui, dans une position de commutation ouverte, applique la pression d'alimentation produite par le compresseur (1) au récipient (3) d'air principal et, dans une position de commutation fermée, ferme cette liaison, une liaison permanente pour l'air comprimé du compresseur (1) au récipient (11) d'air auxiliaire subsistant.

7. Dispositif suivant la revendication 5 ou 6,
**caractérisé en ce qu'**il est prévu un élément (12) de vanne, qui est monté en parallèle au dispositif (10) de vannes de commutation et qui remplit le récipient (11) d'air auxiliaire en alternance de l'air comprimé du réservoir (3) d'air principal.

8. Dispositif suivant la revendication 7,
**caractérisé en ce que** l'élément (12) de vanne est constitué sous la forme d'un clapet anti-retour soumis à l'action d'un ressort avec sens de passage du récipient (3) d'air principal au récipient (11) d'air auxiliaire.

9. Dispositif suivant la revendication 7 ou 8,
**caractérisé en ce que** la pression de commutation du dispositif (10 ; 10') de vannes de commutation est en-dessous de la pression d'alimentation nominale du récipient (3) d'air auxiliaire.

10. Dispositif suivant la revendication 5 ou 6,
**caractérisé en ce qu'**une unité (7) de commande prescrit un signal de commutation pour la commande du dispositif (10 ; 10') de vannes de commutation.

11. Dispositif suivant la revendication 10,
**caractérisé en ce que** l'unité (7) de commande est constituée sous la forme d'une unité électronique de commande et est reliée du côté de l'entrée à un capteur (13) de pression sur le récipient (3) d'air principal ainsi qu'à un capteur (14) de pression sur le récipient (11) d'air auxiliaire, l'unité (10 ; 10') électronique de commande en déterminant le signal de commutation du dispositif (10) de vannes de commutation pouvant être commandé électriquement et/ou du compresseur (1).

12. Dispositif suivant la revendication 5 ou 6,
**caractérisé en ce que** le dispositif (10 ; 10') de vannes de commutation est, au moyen d'une soupape de décharge, et les capteurs (13, 14) de pression, au moyen d'interrupteurs de pression, réalisé d'une manière purement mécanique.

13. Dispositif suivant l'une des revendications 5 à 12,
**caractérisé en ce que** la première source d'énergie est constituée sous la forme d'un pantographe (5) pour le prélèvement d'énergie électrique par caténaire, sous la forme d'une barre de courant s'étendant en-dessous du véhicule ou sous la forme d'un groupe de bord produisant de l'énergie électrique et **en ce que** la deuxième source d'énergie est constituée sous la forme d'une batterie (6) de véhicule.

14. Dispositif suivant l'une des revendications 5 à 13,
**caractérisé en ce que** le servomoteur (9) pneumatique actionne un pantographe (5) et/ou un interrupteur principal pour la mise en circuit d'un démarreur pour un groupe de bord produisant de l'énergie électrique.
